# EUROPÄISCHE PATENTSCHRIFT

(11) **EP 0 708 998 B1**
(45) Veröffentlichungstag und Bekanntmachung des Hinweises auf die Patenterteilung: **29.01.1997**
(21) Anmeldenummer: 94918287.7
(22) Anmeldetag: 21.06.1994
(51) Int. Cl.: H02J 9/06, H02J 1/10

(54) **GEPUFFERTES GLEICHSPANNUNGSVERSORGUNGSSYSTEM**
BUFFERED D.C. POWER SUPPLY
SYSTEME D'ALIMENTATION EN TENSION CONTINUE FONCTIONNANT EN TAMPON

(30) Priorität: 16.07.1993 DE 4323940
(43) Veröffentlichungstag der Anmeldung: 01.05.1996
(73) Patentinhaber: Siemens Nixdorf Informationssysteme AG, 33106 Paderborn (DE)
(72) Erfinder: POLLMEIER, Werner, D-33415 Verl (DE); SCHUCK, Josef, D-33100 Paderborn-Dahl (DE); WEIDNER, Ernst, D-33106 Paderborn (DE)
(74) Vertreter: Fuchs, Franz-Josef, Dr.-Ing.
(86) Internationale Anmeldenummer: DE9400703
(87) Internationale Veröffentlichungsnummer: WO9502914

(56) Entgegenhaltungen:
- EP-A- 0 434 843
- DD-A- 266 448
- DE-A- 3 322 943
- US-A- 4 694 194
- US-A- 5 086 235

## Beschreibung

### Technisches Gebiet

Die Erfindung betrifft ein Gleichspannungsversorgungssystem, bei dem eine Hauptspannungsquelle durch eine Hilfsspannungsquelle gepuffert wird, indem beim Ausfall der Hauptspannungsquelle die Hilfsspannungsquelle die Energieversorgung übernimmt.

### Stand der Technik

Bei einer bekannten Form der gepufferten Gleichspannungsversorgung wird die Netzspannung als Hauptspannungsquelle gleichgerichtet und speist als Zwischenspannung einen Schaltspannungswandler, welcher den letztendlichen Verbraucher versorgt. Die Spannung eines Akkumulators wird über einen weiteren Spannungswandler auf einen Wert nahe der unteren Grenze der Zwischenspannung gebracht. Durch Dioden werden Haupt- und Hilfsspannung entkoppelt und erzeugen so alternativ die Zwischenspannung. Insbesondere bei Datenverarbeitungsgeräten wird ein digitales Signal benötigt, das anzeigt, ob die weitere Stromversorgung gesichert ist oder die Hilfsspannung nach einem Netzausfall erschöpft ist. Zu diesem Zweck vergleicht ein als Schwellwertschalter ausgebildeter Überwachungsbaustein die Zwischenspannung mit einer Vergleichs spannung und erzeugt so ein digitales Netzausfallsignal.

Nachteilig bei dieser Form der Zwischenspannungserzeugung ist die durch die Summation von Toleranzen, wie in der Beschreibung genauer erläutert wird, notwendige große Toleranz der Eingangsspannung, für die der Verbraucher der Zwischenspannung, also der Schaltspannungswandler, ausgelegt sein muß. Dieser muß für hohe Spannungen und gleichzeitig für hohe Ströme bei geringen Eingangsspannungen gestaltet sein, um die gewünschte Leistung am Ausgang bereitstellen zu können.

Das Dokument EP-A-0 434 843 beschäftigt sich ebenfalls mit der Erzeugung eines Netzausfallsignales und schlägt darüberhinaus eine Anhebung einer gepufferten Spannung gegenüber der beim Netzausfall sich im Normalbetrieb einstellenden absinkenden Spannung vor. Dies wird dadurch erreicht, daß zuerst die maximale Pulsbreite eines Schaltwandlers vergrößert wird und dann - beim zweiten Unterschreiten einer Vergleichsspannung - ein Kondensator als Hilfsspannungsquelle zugeschaltet wird. Durch den Kondensator in Verbindung mit der Hauptstromquelle wird die bereits abgesunkene Zwischenspannung abhängig von der Vergleichsspannung wieder auf das Niveau der Hauptspannungsquelle angehoben.

Das Netzausfallsignal wird bereits beim ersten Unterschreiten der Vergleichsspannung abgegeben.

In der DE 33 22 943 C2 wird ein Spannungsversorgungssystem gezeigt, bei dem eine Zwischenspannung verwendet wird. Als Hauptspannungsquelle dient die gleichgerichte Netzwechselspannung. Die Hilfsspannungsquelle wird durch einen Akkumulator bereitgestellt, dessen Ausgangsspannung durch einen Gleichspannungswandler auf die Zwischenspannung transformiert wird. Eine Steuerung überwacht die Netzspannung und schaltet bei Unterschreiten einer Vergleichsspannung den Gleichspannungswandler ein und somit die Hilfsspannungsquelle an die Zwischenspannung.

Es ist Aufgabe der Erfindung, eine gepufferte Zwischenspannung bereitzustellen, deren Spannungsbereich nicht wesentlich weiter als der der aus der Netzspannung gewonnenen Spannung liegt.

### Darstellung der Erfindung

Die Erfindung löst diese Aufgabe durch die Merkmale des Anspruchs 1.

Insbesondere wird das aus der Zwischenspannung gewonnene bisherige digitale Netzausfallsignal verwendet, um die Hilfsspannung einzuschalten. Die Hilfsspannung ist dabei zunächst größer als die Vergleichsspannung, die zu dem Netzausfallsignal führt. Dies führt dazu, daß das Netzausfallsignal durch Rückkopplung oszilliert, also zu einem schnell aufeinanderfolgenden An- und Ausschalten, das zunächst nachteilig erscheint. Durch ein zwischengeschaltetes Verzögerungsglied kann dieser Nachteil jedoch bereits beseitigt werden. Durch ein weiteres Integrations- oder Verzögerungsglied kann dann das den Verbrauchern zugeleitete Netzausfallsignal erzeugt werden, wenn das oszillierende Signal für mehr als einen Zyklus fehlt.

In einer anderen Ausführungsform wird davon Gebrauch gemacht, daß die Hilfsspannungsquelle ein Gleichspannungswandler ist, dessen Ausgangsspannung durch die Netzausfallsteuerung gesteuert werden kann. Auch hier wird in Kauf genommen, daß das ursprüngliche Netzausfallsignal oszilliert und erst durch ein Zeitglied das weiterzuleitende Netzausfallsignal gebildet werden muß. Die analoge Steuerung schaltet bei Beginn des Netzausfallsignals die Hilfsspannung mit einer oberhalb der Vergleichspannung liegen Spannung ein, wodurch das Netzausfallsignal praktisch sofort wieder deaktiviert wird. Die Steuerung hält jedoch die Hilfsspannung eingeschaltet und verwendet vielmehr das deaktivierte Netzausfallsignal dazu, über eine Regelspannung die Ausgangsspannung der Hilfsspannungsquelle kontinuierlich zu vermindern. Dadurch wird die Vergleichspannung wieder unterschritten und das Netzausfallsignal wieder aktiviert. Diese Änderung wird dazu verwendet, die Steuerspannung wieder zu erhöhen und so die Ausgangsspannung der Hilfsspannugsquelle wieder zu erhöhen. Das digitale Netzausfallsignal wird also analog integriert und als Steuerspannung der Hilfsspannungsquelle zugeführt.

In einer vorteilhaften Weiterbildung wird zusätzlich die Zwischenspannung in der Steuerung verwendet, um die Ausgangsspannung gleichfalls in die Regelstrecke zu übernehmen und so die Zwischenspannung auf einfache Weise genauer zu führen.

### Kurzbeschreibung der Zeichnungen

Es zeigen
- Fig. 1: ein gepuffertes Gleichspannungsversorgungssystem nach dem Stand der Technik, das Bausteine enthält, die auch bei der Erfindung eingesetzt werden,
- Fig. 2: ein schematisches Blockschaltbild eines Ausführungsbeispiels nach der Erfindung,
- Fig. 3: ein Schaltbild eines Gleichspannungsversorgungssystems, bei dem verschiedene Baugruppen durch diskrete Bauelemente realisiert sind,
- Fig. 4: einen über der Zeit dargestellten Verlauf der Ausgangsspannung der zweiten Gleichspannungsquelle,
- Fig. 5: ein weiteres Ausführungsbeispiel der Erfindung mit vereinfachter Schaltungsanordnung zur Regelung der Ausgangsspannung,
- Fig. 6: einen Verlauf der Ausgangsspannung der Hilfsspannungsquelle mit um den Schwellwert schwankenden Wert über der Zeit sowie die beiden digtialen Steuersignale,
- Fig. 7: einen idealisierten Verlauf der Ausgangsspannung der Hilfsspannungsquelle über der Zeit mit dem digitalen Ausfallsignal,
- Fig. 8: ein Gleichspannungsversorgungssystem mit mehreren Hauptspannungsquellen und einer Hilfsspannungsquelle.

### Detaillierte Beschreibung der Erfindung

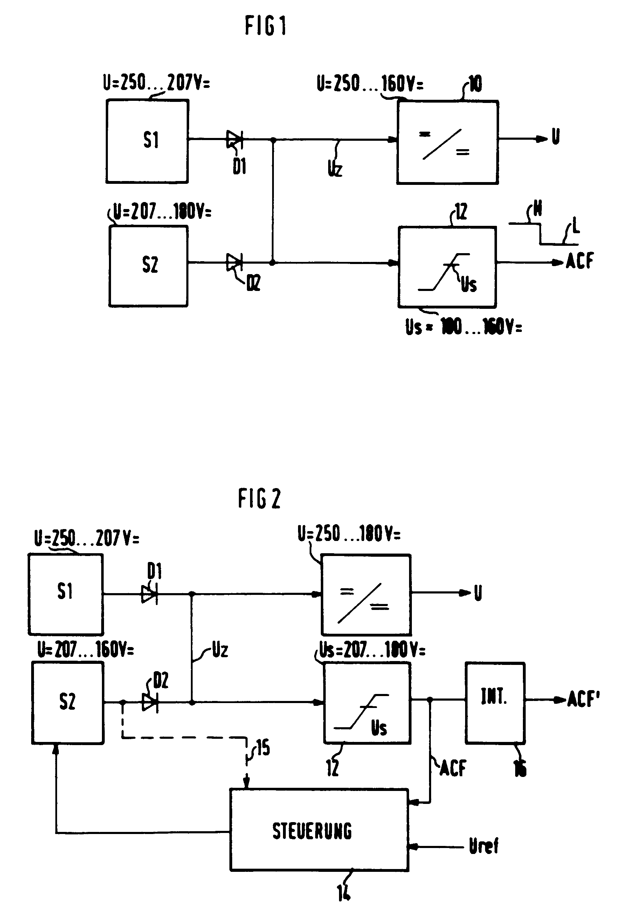

In Fig. 1 sind Bausteine eines Gleichspannungsversorgungssystems nach dem Stande der Technik dargestellt, die auch bei einem Ausführungsbeispiel nach der Erfindung verwendet werden. Das in Fig. 1 dargestellt Gleichspannungsversorgungssystem hat ein getaktetes Netzgerät 10, das als Gleichspannungswandler in bekannter Weise arbeitet. Das Netzgerät erzeugt eine konstante Ausgangsspannung U. Es wird im Normalbetrieb aus einer Hauptspannungsquelle S1 über eine Koppeldiode D1 gespeist. Alternativ ist eine Speisung aus einer Hilfsspannungsquelle S2 über eine Koppeldiode D2 vorgesehen. Die am Eingang des Netzgerätes 10 anliegende Zwischenspannung Uz wird von einem Überwachungsbaustein 12 mit einem Schwellwert Us verglichen. Wenn die Zwischenspannung Uz kleiner ist als der Schwellwert Us, so gibt der Überwachungsbaustein 12 ein digitales Signal ACF (Alternating Current Fail) mit niedrigem Pegel L ab. Dieser Zustand tritt ein, wenn keine der beiden Spannungsquellen das Netzgerät 10 mit ausreichend Spannung versorgen kann und signalisiert damit einen unmittelbar bevorstehenden Ausfall der Ausgangsspannung U. Wenn die Zwischenspannung Uz größer ist als der Schwellwert Us, so gibt der Überwachungsbaustein 12 ein Signal ACF mit hohem Pegel H ab.

Im allgemeinen werden derartige Gleichspannungsversorgungssysteme am Wechselspannungsnetz betrieben. Die Hauptspannungsquelle S1 ist als Netzgleichrichter ausgebildet, der bei einer Schwankung der Wechselspannung um ±10% und einem Nennwert von 230V einen Gleichspannungsbereich von 207V bis ca. 250V hat. Damit im Normalbetrieb die Hilfsspannungsquelle S2, die im allgemeinen aus einer Batterie gespeist wird, nicht vorzeitig entladen wird, schließt sich ihr Spannungsbereich möglichst nur geringfügig überlappend an den der Hauptspannungsquelle S1 an. Bei einer üblichen relativen Spannungsschwankung der zweiten Gleichspannungsquelle von ±5% wird als Nennspannung 198V mit einem Bereich von 180V bis 207V gewählt. Damit erst beim Unterschreiten des Betriebsspannungsbereichs der Hilfsspannungsquelle S2 der Überwachungsbaustein 12 das Signal ACF aktiviert, ist dessen Schwellwert Us so zu wählen, daß er stets unterhalb der kleinsten Spannung der Hilfsspannungsquelle S2 liegt. Dies bedeutet, daß der Schwellwert Us stets kleiner als 180V sein muß. Da auch der Überwachungsbaustein 12 und der Schwellwert einer Toleranz unterliegen, beispielsweise zusammen ±5%, ist als Nominalwert 170V mit einer Schwankungsbereite von 160V bis 180V anzunehmen.

Gemäß dem dargestellten betriebsnahen Beispiel muß das Netzgerät so ausgelegt sein, daß es einen Eingangs-Spannungsbereich von 160V bis 250V sicher verarbeitet. Da die abzugebende Leistung gleich bleibt, muß das Netzgerät sowohl für eine große Spannung bei 250V als auch für einen hohen Strom bei 160V ausgelegt werden. Auch steigen die Verluste mit einem besonders großen Eingangsbereich.

Bei dem in der Fig. 2 dargestellten Ausführungsbeispiel der Erfindung ist der Eingangs-Spannungsbereich des Netzgeräts 10 für denselben Betriebsspannungsbereich der Hauptspannungsquelle S1 und der Hilfsspannungsquelle S2 verringert. Wie zu erkennen ist, hat das Gleichspannungsversorgungssystem nach Fig. 2 einen mit dem Beispiel nach der Fig. 1 ähnlichen Aufbau, mit dem Unterschied, daß das Signal ACF einer Steuerung 14 zugeführt ist, die die Ausgangsspanung Ua der Hilfsspannungsquelle S2 einstellt. Dabei wird eine Hilfsspannungsquelle mit steuerbarer Ausgangsspannung verwendet, wie sie beispielsweise vorliegt, wenn die Gleichspannung einer Batterie durch eine Gleichspannungswandler angehoben wird. Weiterhin ist der Schwellwert Us auf einen höheren Wert von nominal 198V bei einem Toleranzbereich von 180V bis 207V angehoben.

Wenn die Spannung der Hauptspannungsquelle S1 den Schwellwert Us unterschreitet, so wird das Signal ACF aktiviert durch Übergang von H auf L. Die Steuerung 14 veranlaßt nun, daß die Hilfsspannungsquelle S2 aktiviert wird. Mit der Aktivierung, also zu Beginn des Speisens der Hilfsspannungsquelle S2, hat deren Ausgangsspannung Ua einen Wert oberhalb des Schwellwerts Us. Dies bedeutet, daß das Signal ACF in den inaktiven Zustand zurück wechselt, also von L nach H. Dieser Wechsel wird von der Steuerung vorerst nicht berücksichtigt; vielmehr regelt die Steuerung 14 die Ausgangsspannung Ua auf einen Wert nahe dem Schwellwert Us ein, der der Steuerung 14 als Sollwert in Form einer Referenzspannung Uref zugeführt wird. Der Istwert wird über den Signalweg 15 zugeführt. Dieser Signalweg 15 und die Referenzspannung sind optional, was in Fig. 2 durch eine gestrichelte Linie angedeutet ist und weiter unten erläutert wird. Die Referenzspannung Uref ist vorzugsweise gleich der Schwellwertspannung bzw. durch einen Spannungsteiler abgeleitet.

Der Überwachungsbaustein 12 ist beim Ausführungsbeispiel nach der Fig. 2 Teil eines Regelkreises zur Regelung der Ausgangsspannung Ua der Hilfsspannungsquelle S2. Sein Schwellwert Us kann nunmehr auf einen höheren Wert (nominal 198V) eingestellt werden. Dieser Wert liegt innerhalb des Betriebsspannungsbereichs der Hilfsspannungsquelle S2. Dies bedeutet, daß der Eingangs-Spannungsbereich des Netzgerätes 10 verringert ist, im dargestellten Beispiel auf einen Wert von 180V bis 250V Gleichspannung. Wie ein unmittelbarer Vergleich mit dem Eingangsspannungsbereich des Ausführungsbeispiels nach dem Stand der Technik (Fig. 1) zeigt, hat sich bei der Erfindung der kritische untere Spannungswert deutlich erhöht, was zu einer erheblich verringerten maximal auftretenden Wärmeverlustleistung und einer verringerten Maximalbelastung des Schalttransistors des Netzgeräts 10 führt.

Das Signal ACF ist beim Ausführungsbeispiel nach Fig. 2 einem Integratorbaustein 16 zugeführt, der ein Signal ACF' mit niedrigem Pegel L nur dann erzeugt, wenn das entsprechende Signal ACF für eine vorgegebenen Zeit vorhanden ist. Der Integratorbaustein 16 kann auch durch ein retriggerbares, monostabiles Flip-Flop mit einstellbarer Zeitverzögerung realisiert werden.

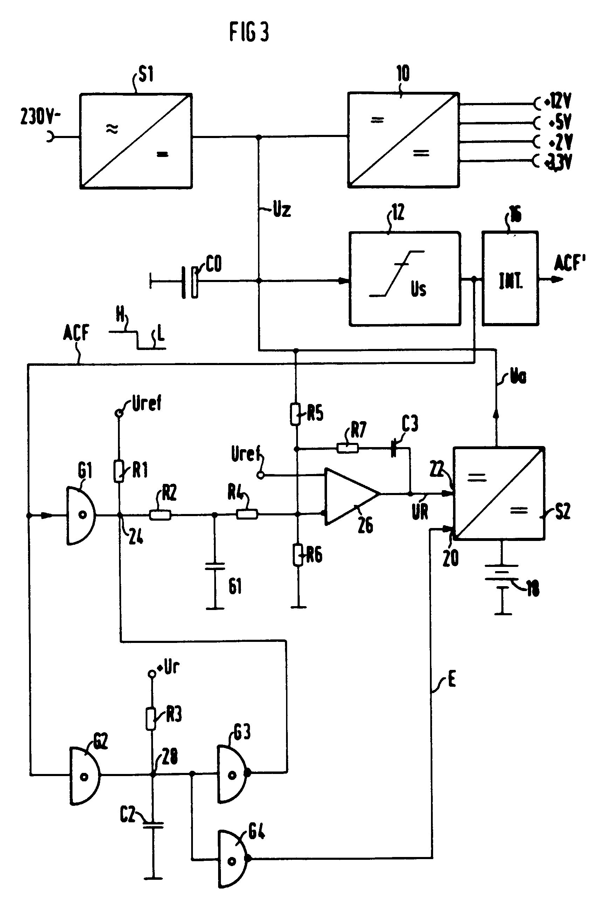

In Fig. 3 ist das Gleichspannungsversorgungssystem nach Fig. 2 mit weiteren technischen Einzelheiten dargestellt, wobei insbesondere die Steuerung 14 durch einzelne Bauelemente wiedergegeben ist. In Fig. 3 ist die Hauptspannungsquelle S1 an das Wechselstromnetz von 230V angeschlossen. Die Hauptspannungsquelle S1 ist durch einen Netzgleichrichter realisiert. Die Ausgangsspannung der Hauptspannungsquelle S1 wird durch einen Kondensator C0 geglättet und ist dem getakteten Netzgerät 10 zugeführt, das als DC/DC-Wandler arbeitet. An den Eingang des Netzgeräts 10 ist auch die Ausgangsspannung Ua der Hilfsspannungsquelle S2 gelegt, die ebenfalls als geregelter DC/DC-Wandler ausgebildet ist. Die Hilfsspannungsquelle S2 wird aus einer Batterie 18 gespeist. Durch die Zusammenschaltung der Hauptspannungsquelle S1 und der Hilfsspannungsquelle S2 entsteht die Zwischenspannung Uz. Da die Hauptspannungsquelle S1 im wesentlichen aus Gleichrichterdioden besteht, ist die Diode D1 von Fig. 2 nicht notwendig. Auch die Funktion der Diode D2 wird durch die übliche Gleichrichterschaltung am Ausgang der so ausgeführten Hilfsspannungsquelle S2 übernommen.

Die Hilfsspannungsquelle S2 hat zwei Steuereingänge 20, 22. Am Steuereingang 20 wird ein Signal E zugeführt, durch das die Hilfsspannungsquelle S2 ein- bzw. ausgeschaltet werden kann. Am Steuereingang 22 wird eine Regelspannung Ur zugeführt, mit der die Ausgangsspannung Ua gesteuert wird.

Das Ausgangssignal ACF des Überwachungsbausteins 12 wird einem Gatter G1 zugeführt. Dieses Gatter G1 sowie die noch im folgenden beschriebenen Gatter sind vom Typ mit offenem Kollektor bzw. mit offenen Ausgang. Das Signal des Gatters G1 wird einem Zwischenabgriff 24 eines aus Widerständen R1, R2 gebildeten Spannungsteilers zugeführt, dem in Serie ein Kondensator C1 gegen Masse nachgeschaltet ist. Der Widerstand R1 ist an eine Referenzspannungsquelle Uref gelegt. Die Bauelemente G1, R1, R2, C1 bilden einen Integratorbaustein mit einer Integrationszeit TI1. Die Spannung am Kondensator C1 wird über einen Widerstand R4 einem Mittelabgriff eines aus den Widerständen R5, R6 gebildeten Spannungsteilers und dem invertierenden Eingang eines Verstärkers 26 zugeführt. Der Verstärker 26 erzeugt die dem Steuereingang 22 zugeführte Spannung Ur, welche über den Kondensator C3 und den Widerstand R7 auf den invertierten Eingang rückgekoppelt wird. Der Verstärker 26 arbeitet als PI-Regler.

Der Widerstand R5 ist an die Zwischenspannung Uz, zugleich Ausgangsspannung Ua, gelegt. Die Wiederstände R5 und R6 bilden somit einen Istwert-Spannungsteiler. An den nicht invertierenden Eingang des Verstärkers 26 ist die Referenzspannung Uref gelegt. Die Referenzspannung ist so gewählt, daß im Normalbetrieb die Ausgangsspannung Ua der Hilfsspannungsquelle S2 im eingeschalteten Zustand knapp oberhalb oder unterhalb des Schwellwerts Us liegt. Vorzugsweise wird (nicht gezeigt) die Referenzspannung aus der den Schwellwert Us bestimmenden Spannung durch einen Spannungsteiler erzeugt.

Das Signal ACF ist ferner einem Gatter G2 zugeführt, dessen Ausgangssignal an einem Mittelabgriff 28 eines aus einem Widerstand R3 und einem Kondensator C2 gebildeten Zeitglieds gelegt ist. Der Widerstand R3 wird aus der Versorgungsspannung Uv der Steuerung gespeist. Mit dem Mittelabgriff 28 sind die Eingänge der Gatter G3, G4 mit invertiertem Ausgang verbunden. Das Ausgangssignal des Gatter G3 ist zum Zwischenabgriff 24 geführt. Das Gatter G4 erzeugt das oben erwähnte Ausgangssignal E zum Ein- bzw. Ausschalten der Hilfsspannungsquelle S2.

Im folgenden wird die Funktionsweise des in Fig. 3 dargestellten Gleichspannungsversorgungssystems in drei Betriebsphasen erläutert. Die Betriebsphase 1 ist dadurch gekennzeichnet, daß die Hauptspannungsquelle S1 einwandfrei arbeitet. Dies bedeutet, daß die Ausgangsspannung Ua größer als der Schwellwert Us ist und das vom Überwachungsbaustein 12 erzeugte Signal ACF dauerhaft auf Pegel H liegt. Der offene Kollektorausgang des Gatters G1 ist dann gesperrt. Der Kondensator C1 könnte über den Spannungsteiler mit den Widerständen R1, R2 auf eine positive Spannung aufgeladen werden, jedoch wird dies durch das Gatter G3 mit niedrigem Pegel L verhindert, da das Gatter G2 sperrt und demzufolge am Punkt 28 eine positive Spannung anliegt. Auf diese Art wird der Anfangswert der Integratorstufe mit dem Kondensator C1 für die nachfolgende Betriebsphase eingestellt. Das Gatter G4 erzeugt an seinem Ausgang ein Signal E mit Pegel L. Bei diesem Pegel ist die Hilfsspannungsquelle S2 ausgeschaltet.

Der Signalpegel L am Zwischenabgriff 24 verhindert wie erwähnt ein Aufladen des Kondensators C1. Dessen niedriger Spannungswert erniedrigt auch die Teilspannung am Widerstand R6 des aus den Widerständen R5, R6 gebildeten Istwert-Spannungsteilers. Dadurch wird ein niedriger Istwert der Ausgangsspannung Ua vorgetäuscht. Der Verstärker 26 erhöht demzufolge die Regelspannung Ur, um eine Absenkung des Istwertes an seinem Eingang auszugleichen. Beim Einschalten der Hilfsspannungsquelle S2 wird diese also aufgrund der überhöhten Regelspannung Ur eine hohe Ausgangsspannung Ua einstellen.

Die Betriebsphase 2 beginnt nach einem Abfall der von der Hauptspannungsquelle S1 abgegebenen Spannung, z.B. durch Netzausfall. Die Zwischenspannung Uz unterschreitet den Schwellwert Us, so daß der Überwachungsbaustein 12 ein Signal ACF mit Pegel L erzeugt. Das durchschaltende Gatter G2 entlädt den Kondensator C2, woraufhin die Gatter G3 und G4 sperren. Das Signal E des Gatters G4 ändert seinen Pegel von L auf H, wodurch die Gleichspannungsquelle S2 eingeschaltet wird. Das gleichfalls durchschaltende Gatter G1 hält den Punkt 24 auf niedrigem Potential.

Da am Steuereingang 22 eine hohe Regelspannung Ur anliegt, wird zu Beginn des Speisens aus der Hilfsspannungsquelle S2 deren Ausgangsspannung Ua auf einen Wert deutlich oberhalb des Schwellwerts Us eingestellt. Daraufhin schaltet der Überwachungsbaustein 12 das Signal ACF wieder auf den Pegel H, so daß die Gatter G1 und G2 deaktiviert werden und ihre Ausgänge, die Zwischenabgriffe 24 und 28, nicht mehr auf niedrigem Potential gehalten werden. Der Kondensator C2 am Zwischenabgriff 28 (Ausgang von Gatter G2) lädt sich langsam über der Widerstand R3 auf, behält jedoch zunächst niedriges Potential, so daß das Gatter G3 deaktiviert und über G4 die Hilfsspannungsquelle S2 aktiviert bleibt. Damit liegt am Zwischenabgriff 24 H-Pegel an, und der aus den Bausteinen R1, R2, C1 gebildete Integratorbaustein ist freigeschaltet. Damit wird der Kondensator C1 über die Widerstände R1, R2 geladen; seine Spannung steigt. Dies bewirkt, daß der Verstärker 26 die Regelspannung Ur auf einen niedrigeren Wert einstellt, woraufhin die Ausgangsspannung Ua zurückgenommen wird. Wenn die Ausgangsspannung Ua kleiner als der Schwellwert Us wird, schaltet der Überwachungsbaustein 12 sein Signal ACF wieder auf Pegel L. Durch das Gatter G1 wird der Zwischenabgriff 24 auf niedriges Potential gelegt und der Kondensator C1 entladen, womit sich die Regelspannung Ur und damit die Ausgangsspanung Ua erhöhen. Es entsteht ein sich regelmäßiges Wiederholen von H- und L-Pegeln des Signals ACF; dieses Signal oszilliert. Dieses stellt einen Regelprozeß dar.

Das durch den Widerstand R3 und den Kondensator C2 gebildete Zeitglied ist so dimensioniert, daß während des Regelprozesses die Gatter G3, G4 stets im gesperrten Zustand bleiben, d.h. die Zeitkonstante dieses Zeitglieds ist größer als die Zeit gewählt, innerhalb der das Signal ACF während des Regelprozesses jeweils auf dem Pegel H ist. Eine kleine Hysterese in dem Überwachungsbaustein 12 bei der Erzeugung des Signals ACF gewährleistet steile Spannungsflanken beim Umschalten der Pegel und unterstützt den Regelprozeß.

Die Betriebsphase 3 ist durch Rückkehr der normalen Ausgangsspannung Ua an der Hauptspannungsquelle S1 gekennzeichnet, wodurch die Zwischenspannung Uz permanent größer als die Vergleichsspannung Us ist. Das Signal ACF hat dann H-Pegel, woraufhin die Gatter G1 und G2 unabhängig vom bislang laufenden Regelprozeß sperren. Der Kondensator C2 kann sich auf positive Spannung aufladen. Bei Erreichen der Gatterschwellwerte schalten die Gatter G3 und G4 an ihrem jeweiligen Ausgang auf L-Pegel. Dieser Pegel bewirkt beim Ausgangssingnal E, daß die Hilfsspannungsquelle S2 abgeschaltet wird. Über das Gatter G3 wird der Kondensator C1 entladen. Damit ist die Betriebsphase 1 wieder erreicht. Wenn die Spannung der Hauptspannungsquelle S1 unter den Schwellwert Us absinkt, beginnt erneut die Betriebsphase 2.

Sollte während der Betriebsphase 2 die Batterie 18 erschöpft sein, so bleibt die Ausgangsspannung Ua trotz hoher Regelspannung Ur unterhalb des Schwellwerts Us. Damit bleibt das Signal ACF auf L-Pegel, und über den Impulsformer 16, der, wie beschrieben, bespielsweise als Integrator oder retriggerbare Kippstufe, ausgeführt ist, wird das finale Ausfallsignal ACF' aktiviert.

Bei einer Variante des in Fig. 3 dargestellen Gleichspannungsversorgungssystems entfällt der Verstärker 26 sowie die Widerstände R4, R5, R6 und R7 sowie der Kondensator C3 und die Referenzspannung Uref. Widerstand R1 wird an eine vorgegebene, vorzugsweise von der Hilfsspannungsquelle S2 bereitgestellten, Spannung gelegt. Die Spannung am Kondensator wird direkt als Regelspannung Ur verwendet. In diesem Fall wird die Hilfsspannungsquelle S2 so ausgelegt, daß bei Spannung Null am Eingang 22 die Ausgangsspannung Ua oberhalb der Schwellenspannung Us liegt und bei der am Widerstand R1 liegenden Versorgungsspannung am unteren Wert der für den Schaltspannungswandler 10 bestimmten Eingangsspannung liegt.

Eine weitere Variante des in der Fig. 3 dargestellen Gleichspannungsversorgungssystems kann darin bestehen, nicht den Istwert der Ausgangsspannung Ua über den Istwert-Spannungsteiler mit den Widerständen R5, R6 zu beinflussen, sondern die dem Verstärker 26 am nicht invertierten Eingang als Sollwert zugeführte Referenzspannung Uref. Diese Referenzspannung muß dann so gewählt werden, daß sie zu Beginn des Speisens aus der Hilfsspannungsquelle S2 erhöht ist.

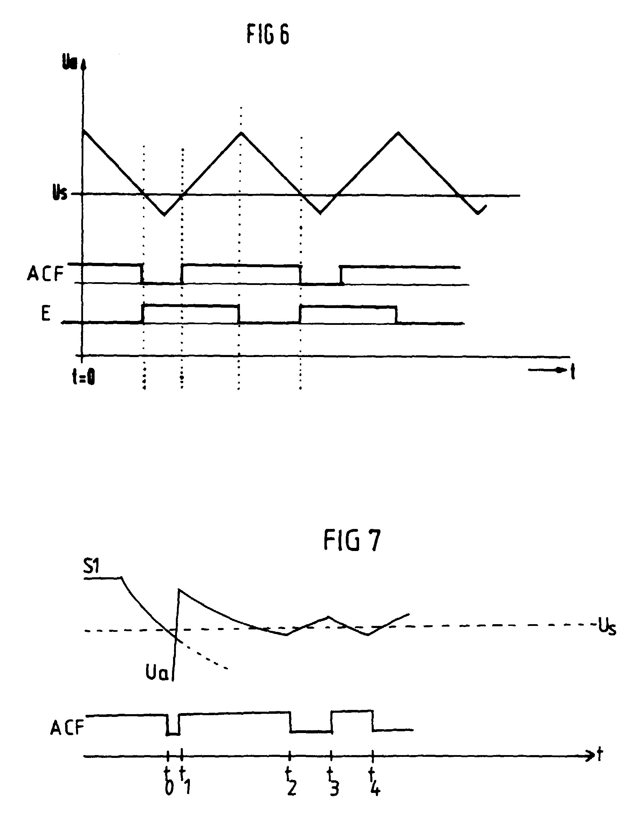

Die Signalverläufe der beschriebenen Vorgänge beim Übergang von der Betriebsphase 1 in die Betriebsphase 2 sind in Fig. 7 idealisiert als Funktion der Zeit dargestellt. Zum Zeitpunkt t0 ist die von der Hauptspannungsquelle S1 bereitgestellt Spannung unter den Schwellwert Us gefallen, so daß das Signal ACF auf L-Pegel geht. Damit wird die Hilfsspannungsquelle S2 eingeschaltet und übernimmt die Speisung. Zum Zeitpunkt t1 wird die Schwellspannung Us wieder überschritten, und das Signal ACF geht erneut auf H-Pegel; die Hilfsspannungsquelle S2 bleibt jedoch eingeschaltet. Ihre Spannung wird jedoch durch den Integrator vermindert, bis zum Zeitpunkt t2 die Schwellspannung Us wieder unterschritten wird und das Signal ACF wieder auf L-Pegel geht. Damit wird ein erneuter Anstieg bewirkt.

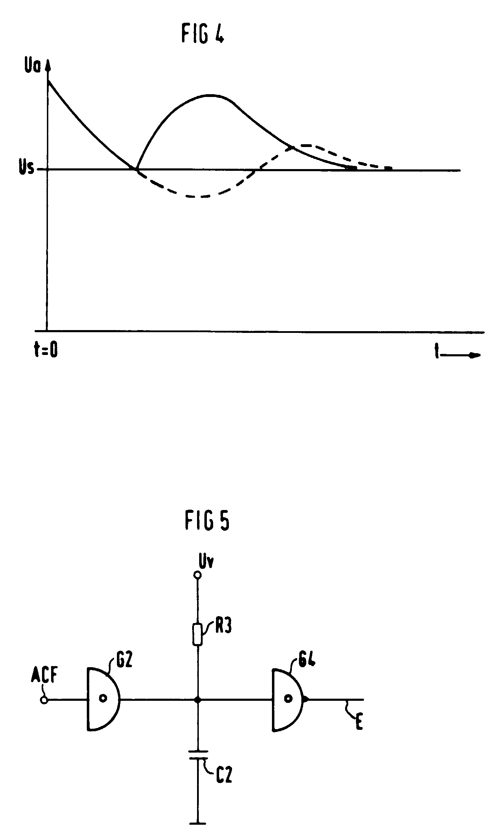

Fig. 4 zeigt das Verhalten der Ausgangsspannung Ua in Bezug auf den Schwellwert Us über der Zeit t. Der gestrichelt eingezeichnet Verlauf zeigt ein Regelverhalten, bei dem die Ausgangsspannung Ua zu Beginn des Speisens aus der Hilfsspannungsquelle S2 um den Schwellwert Us schwankt.

Bei einer weiteren Variante zu der in Fig. 3 gezeigten Schaltungsanordnung entfällt der aus den Bausteinen G1, R1, R2, C1 gebildete Integrator sowie das Gatter G3. Diese Variante ist in Fig. 5 skizziert. Das vom Gatter G4 erzeugte Signal E schaltet bei einem Wechsel des Signals ACF vom Pegel H nach Pegel L unverzögert auf den Pegel H und damit die Hilfsspannungsquelle S2 ein. Wechselt dann, wenn die Ausgangsspannung Ua den Schwellwert Us überschreitet, das Signal ACF von Pegel L nach Pegel H, so ändert das Signal E seinen Pegel von H nach L durch das Zeitglied R3 und C2 zeitverzögert, da Gatter G2, wie beschrieben, einen offenen Kollektorausgang hat und der Kondensator nur über den Widerstand R3 aufgeladen wird.

In Fig. 6 ist das Regelverhalten des Gleichspannungsversorgungssystems bei der Schaltungsvariante nach Fig. 5 über der Zeit dargestellt. Die Ausgangsspannung Ua der zweiten Gleichspannungsquelle schwingt linear nach Art eines Sägezahns um den Schwellwert Us. Die Schwankungsperiode Ts hängt von den Zeitkonstanten der Hilfsspannungsquelle S2, dem Zeitglied R3 und C2 und dem Kondensator C0 ab. Die Signale ACF und E sind gleichfalls eingezeichnet. Es wird sichtbar, daß die Ausschaltung gegenüber dem Wechsel des Signals ACF von L nach H verzögert ist.

Da der hohe Spitzenwert der Ausgangsspannung Ua von der Verzögerung abhängt, kann durch Kopplung der Zwischenspannung auf das Zeitglied eine Beeinflussung stattfinden. Beispielsweise kann die Versorgungsspannung des Widerstands R3 an die Zwischenspannung Uz gelegt werden. Dabei kann durch Filter oder auch Verstärker eine Formung stattfinden. Bei steigender Zwischenspannung Uz wird sich dann der Kondensator schneller aufladen und damit einer Steigerung der Zwischenspannung Uz entgegenwirken. Es liegt eine Kopplung der Zwischenspannung Uz auf das Zeitglied vor, mit der die Verzögerungzeit des Zeitglieds gesteuert wird. Auch ist eine Einschaltverzögerung möglich, um die Zykluszeiten zu vergrößern. Durch das wiederholte Abschalten der Hilfsspannungsquelle S2 wird dabei in regelmäßigen Abständen festgestellt, ob die Hauptspannungsquelle S1 wieder die Versorgung übernehmen kann.

Für den Fall, daß die gewünschte Verzögerung bereits in der Auslegung der Hilfsspannungsquelle S2 enthalten ist, kann die Steuerung 14 durch eine einfache Verbindung ersetzt werden, die das digitale Ausfallsignal ACF direkt mit einem Schalteingang der Hilfsspannungsquelle S2 verbindet.

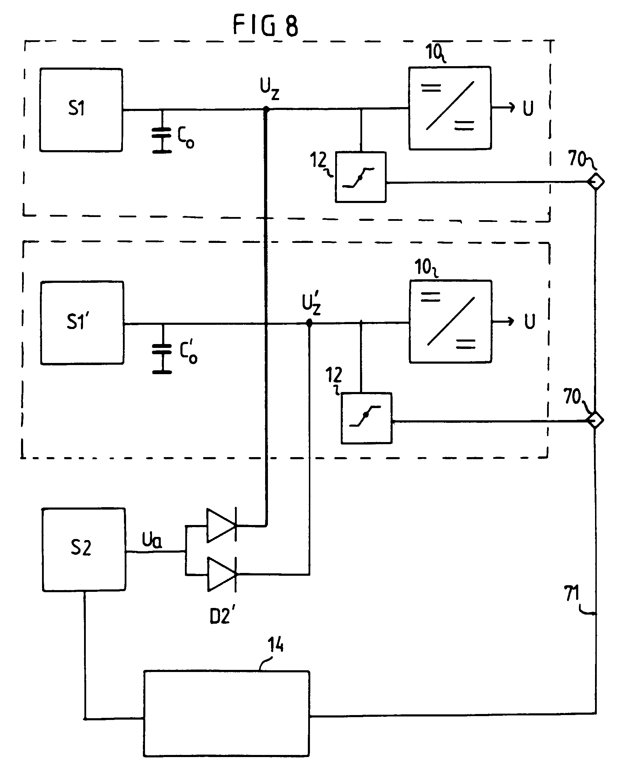

Die Erfindung kann auch bei Gleichspannungsversorgungssystemen mit mehreren Gleichspannungs-Netzgeräten nach Art des Netzgeräts 10 verwendet werden, wobei eine Hilfsspannungsquelle S2 für mehrere Hauptspannungsquellen eingesetzt wird. Diese Anordnung ist in Fig. 8 für den einfachsten Fall von zwei Hauptspannungsquellen dargestellt; eine Erweiterung auf drei oder mehr ist ohne weiteres möglich. Dabei sind eine Hauptspannungsquelle S1, ein zugordneter Siebkondensator C0, ein Gleichspannungswandler 10 als Verbraucher und ein Überwachungsbaustein 12 vorhanden, die, gestrichelt eingerahmt, ein erstes Teilsystem bilden. Ein oder mehrere gleichartige Teilsysteme mit der Hauptspannungsquelle S1', dem Siebkondensator C0', dem Gleichspannungswandler 10' und dem Überwachungsbaustein 12' sind zusätzlich vorhanden. Eine gemeinsame Hilfsspannungsquelle S2 mit der Ausgangsspannung Ua wird über Dioden D2, D2' an die jeweiligen Zwischenspannungen Uz, Uz' geführt. Die Ausgänge der Überwachungsschaltung 12, 12' werden durch eine Oder-Verknüpfung 70, 70' verknüpft und der Steuerung 14 zugeführt. Sind beispielsweise die Hauptspannungsquellen S1 und S1' an verschiedene Phasen eines Drehstromnetzes angeschlossen, so übernimmt bei Ausfall einer Phase die Hilfsspannungsquelle S2 die Versorgung des entsprechenden Teilsystems bei einfacher Schaltungsauslegung. Gleiches gilt für einen Ausfall der Gleichrichtereinrichtungen in einer der Hauptspannungsquellen. Durch entsprechende Dimensionierung übernimmt die Hilfsspannungsquelle S2 auch bei einem vollständigen Ausfall beider Hauptspannungsquellen die Versorgung.

Die Hilfsspannungsquelle S2 kann auch mit nur einem analogen Eingang ausgestattet sein, der von der Steuerung zu Beginn der Speisung schnell auf eine hohe Regelspannung gesteuert wird. Dies kann beispielsweise (nicht dargestellt) dardurch erfolgen, daß der Ausgang des Verstärkers 26 über einen Widerstand an den Steuereingang 22 der Hilfsspannungsquelle S2 gelegt, als Gatter G4 ein nicht-invertierender Typ verwendet wird und der Ausgang dieses Gatters benutzt wird, um die Regelspannung kurzzuschließen.

Durch die Erfindung kann der Toleranzbereich der Zwischenspannung noch weiter eingengt werden. Dabei wird ausgenuzt, daß die Toleranz der Netzspannung (z.b. 20%) meist größer ist als die Toleranz der Hilfsspannungsquelle S2 (z.B. 10%) und die Toleranz des Überwachungsbausteins (z.B. 5%) nochmals geringer ist. Dabei wird dann der Schwellwert so gelegt, daß das Intervall des Überwachungsbausteins mit dem Intervall der Hauptspannungsquelle S1 am unteren Wert abschließt und dies auch für die Hilfsspannungsquelle S2 gilt. Dabei wird in Kauf genommen, daß die Hilfsspannungsquelle S2 in ungünstigen Kombinationen bereits vorzeitig aktiviert wird. Durch die intermittierende Arbeitsweise der Erfindung wird dabei jedoch die Hilfsspannungsquelle S2 weniger belastet als nach dem Stand der Technik, bei der die Hilfsspannungsquelle S2 dann vollständig die Versorgung übernehmen würde.

## Patentansprüche

1. Spannungsversorgungssystem mit einer gepufferten Zwischenspannung (Uz), bei dem
- eine Hauptspannungsquelle (S1) eines vorgegebenen ersten Ausgangsspannungsbereichs mit einer Hilfsspannungsquelle (S2) eines vorgegebenen zweiten Ausgangsspannungsbereichs verbunden ist, wobei die beiden Bereiche sich höchstens geringfügig überlappen und der erste Bereich höher liegt als der zweite;
- die Spannung an der Verbindung der beiden Spannungsquellen (S1, S2) die Zwischenspannung (Uz) darstellt, welche einem Verbraucher vorzugsweise über einen Spannungswandler oder -regler (10) zugeführt wird;
- ein digitales Ausfallsignal (ACF) durch Vergleich der Zwischenspannung (Uz) mit einer vorbestimmten Vergleichsspannung (Us) gebildet wird, welche innerhalb des zweiten Bereichs liegt;
- das Auftreten des digitalen Ausfallsignals (ACF) bewirkt, daß die Ausgangsspannung (Ua) der Hilfsspannungsquelle (S2) über die Vergleichsspannung (Us) ansteigt und das Verschwinden das Ausfallsignals (ACF) ein Absinken der Ausgangsspannung (Ua) der Hilfsspannungsquelle (S2) unter die Vergleichsspannung (Us) bewirkt; und
- ein finales Ausfallsignal (ACF') aktiviert wird, wenn das digitale Ausfallsignal (ACF) für eine vorgegebene Mindestzeit aktiviert ist.

2. Spannungsversorgungssystem nach Anspruch 1, wobei die Hilfsspannungsquelle (S2) einen digitalen Schalteingang (20) hat, der über eine Steuerung (14) mit dem digitalen Ausfallsignal (ACF) verbunden ist, welche dieses in Phase bringt und die Ein- oder Ausschaltflanken verzögert.

3. Spannungsversorgungssystem nach Anspruch 2, wobei die Steuerung zusätzlich mit der Zwischenspannung (Uz) verbunden ist und die Zwischenspannung (Uz) die Verzögerungszeiten beeinflußt.

4. Spannungsversorgungssystem nach Anspruch 1, wobei die Hilfsspannungsquelle einen analogen Steuereingang (22) hat, der über eine Steuerung (14) mit dem digitalen Ausfallsignal (ACF) verbunden ist, und die Steuerung eine Integratorschaltung (G2, R3, C2, G4) für das digitale Ausfallsignals (ACF) enthält, die auf den analogen Steuereingang (22) der Hilfsspannungsquelle (S2) wirkt.

5. Spannungsversorgungssystem nach Anspruch 4, wobei die Steuerung (14) mit der Zwischenspannung (Uz) verbunden ist und über den analogen Steuereingang (22) die Ausgangsspannung (Ua) der Hilfsspannungsquelle (S2) in die Nähe der Vergleichsspannung (Us) regelt.

6. Spannungsversorgungssystem nach einem der Ansprüche 3 bis 5, wobei die Hilfsspannungsquelle (S2) zusätzlich zu dem analogen Steuereingang (22) einen digitalen Schalteingang (20) besitzt, der durch eine Impulsformerstufe (G2, R3, C2, G4) in der Steuerung (14) durch das digitale Ausfallsignals (ACF) aktiviert wird.

7. Spannungsversorgungssystem nach einem der vorhergehenden Ansprüche, wobei das digitale Ausfallsignal (ACF) mit einer Impulsstufe verbunden ist, deren Ausgang das finale Ausfallsignal (ACF') ist, wobei das finale Ausfallsignal (ACF') aktiviert ist, wenn das digitale Ausfallsignal (ACF) für eine vorgegebene Mindestzeit aktiv ist.

8. Spannungsversorgungssystem nach einem der vorhergehenden Ansprüche, wobei die Hauptspannungsquelle (S1) eine mit einem Wechselstrom-Versorgungsnetz verbundene Gleichrichterschaltung und die Hilfsspannungsquelle (S2) ein von einem Akkumulator gespeister Gleichspannungswandler ist.

9. Spannungsversorgungssystem nach einem der vorhergenden Ansprüche, wobei die Zwischenspannung mit einem geregelten Schaltspannungswandler verbunden ist.

10. Kombination mehrerer Spannungsversorgungssysteme nach einem der vorhergehenden Ansprüche mit getrennten Hauptspannungsquellen und Überwachungsbausteinen sowie einer gemeinsamen Hilfsspannungsquelle, wobei die digitalen Ausfallsignale der einzelnen Überwachungsbausteine mit einer Oder-Schaltung verbunden sind, deren Ausgang die Hilfsspannungsquelle steuert.

## Claims

1. Power supply system having a buffered intermediate voltage (Uz), in which
- a principal voltage source (S1) of a prescribed first output voltage range is connected to an auxiliary voltage source (S2) of a prescribed second output voltage range, the two ranges overlapping at most slightly and the first range being higher than the second;
- the voltage at the connection of the two voltage sources (S1, S2) representing the intermediate voltage (Uz), which is fed to a consumer, preferably via a voltage transformer or voltage regulator (10);
- a digital failure signal (ACF) is formed by comparing the intermediate voltage (Uz) with a predetermined reference voltage (Us), which is inside the second range;
- the occurrence of the digital failure signal (ACF) has the effect that the output voltage (Ua) of the auxiliary voltage source (S2) rises above the reference voltage (Us) and vanishing of the failure signal (ACF) causes a drop in the output voltage (Ua) of the auxiliary voltage source (S2) below the reference voltage (Us); and
- a final failure signal (ACF') is activated if the digital failure signal (ACF) is activated for a prescribed minimum time.

2. Power supply system according to Claim 1, in which the auxiliary voltage source (S2) has a digital switching input (20) which is connected to the digital failure signal (ACF) via a controller (14) which brings said signal into phase and delays the switching-on or switching-off edges.

3. Power supply system according to Claim 2, in which the controller is additionally connected to the intermediate voltage (Uz) and the intermediate voltage (Uz) influences the delay times.

4. Power supply system according to Claim 1, in which the auxiliary voltage source has an analog control input (22) which is connected via a controller (14) to the digital failure signal (ACF), and the controller includes an integrator circuit (G2, R3, C2, G4) for the digital failure signal (ACF), which acts on the analog control input (22) of the auxiliary voltage source (S2).

5. Power supply system according to Claim 4, in which the controller (14) is connected to the intermediate voltage (Uz) and controls the output voltage (Ua) of the auxiliary voltage source (S2) into the vicinity of the reference voltage (Us) via the analog control input (22).

6. Power supply system according to one of Claims 3 to 5, in which in addition to the analog control input (22) the auxiliary voltage source (S2) has a digital switching input (20) which is activated by the digital failure signal (ACF) through a pulse shaper stage (G2, R3, C2, G4) in the controller (14).

7. Power supply system according to one of the preceding claims, in which the digital failure signal (ACF) is connected to a pulse stage whose output is the final failure signal (ACF'), the final failure signal (ACF') being activated when the digital failure signal (ACF) is active for a prescribed minimum time.

8. Power supply system according to one of the preceding claims, in which the principal voltage source (S1) is a rectifier circuit connected to an AC supply network, and the auxiliary voltage source (S2) is a DC-DC voltage converter fed from a battery.

9. Power supply system according to one of the preceding claims, in which the intermediate voltage is connected to a controlled switching voltage transformer.

10. A combination of a plurality of power supply systems according to one of the preceding claims having separate principal voltage sources and watchdog modules as well as a common auxiliary voltage source, in which the digital failure signals of the individual watchdog modules are connected to an OR circuit whose output controls the auxiliary voltage source.

## Revendications

1. Système d'alimentation en tension comportant une tension intermédiaire (Uz) de tampon, dans lequel
- une source (S1) de tension principale ayant un premier domaine prescrit de tension de sortie est reliée à une source (S2) de tension auxiliaire ayant un second domaine prescrit de tension de sortie, les deux domaines se chevauchant au plus légèrement et le premier domaine étant plus haut que le second ;
- la tension à la liaison des deux sources (S1, S2) de tension représente la tension intermédiaire (Uz), qui est envoyée à un appareil consommant de l'énergie de préférence par l'intermédiaire d'un convertisseur ou régulateur (10) de tension ;
- un signal numérique (ACF) de panne est formé par comparaison de la tension intermédiaire (Uz) à une tension prédéterminée (Us) de comparaison, qui se trouve dans le second domaine ;
- l'apparition du signal (ACF) numérique de panne fait que la tension (Ua) de sortie de la source (S2) de tension auxiliaire monte au-dessus de la tension (Us) de comparaison et que la disparition du signal (ACF) de panne provoque une baisse de la tension (Ua) de sortie de la source (S2) de tension auxiliaire sous la tension (Us) de comparaison ; et
- un signal (ACF') final de panne est activé, lorsque le signal (ACF) numérique de panne est activé pour un temps minimum prescrit.

2. Système d'alimentation en tension suivant la revendication 1, dans lequel la source (S2) de tension auxiliaire a une entrée numérique (20) de branchement, qui est reliée par l'intermédiaire d'une commande (14) au signal (ACF) numérique de panne, cette commande amenant ce signal (ACF) numérique de panne en phase et retardant les flancs de branchement ou de débranchement.

3. Système d'alimentation en tension suivant la revendication 2, dans lequel la commande est reliée en supplément à la tension intermédiaire (Uz) et la tension intermédiaire (Uz) influence les temps de retard.

4. Système d'alimentation en tension suivant la revendication 1, dans lequel la source de tension auxiliaire a une entrée (22) analogique de commande, qui est reliée par l'intermédiaire d'une commande (14) au signal numérique (ACF) de panne et la commande comprend un circuit intégrateur (G2, R3, C2, G4) pour le signal (ACF) numérique de panne, qui agit sur l'entrée analogique (22) de commande de la source (S2) de tension auxiliaire.

5. Système d'alimentation en tension suivant la revendication 4, dans lequel la commande (14) est reliée à la tension (Uz) intermédiaire et règle par l'intermédiaire de l'entrée (22) analogique de commande la tension (Ua) de sortie de la source (S2) de tension auxiliaire à proximité de la tension (Us) de comparaison.

6. Système d'alimentation en tension suivant l'une des revendications 3 à 5, dans lequel la source (S2) de tension auxiliaire comprend en plus de l'entrée (22) analogique de commande une entrée (20) numérique de branchement, qui est activée par un étage (G2, R3, C2, G4) de formation d'impulsion dans la commande (14) par le signal (ACF) numérique de panne.

7. Système d'alimentation en tension suivant l'une des revendications précédentes, dans lequel le signal (ACF) numérique de panne est relié à un étage de formation d'impulsions, dont la sortie est le signal final (ACF') de panne, le signal (ACF') final de panne étant activé, lorsque le signal numérique (ACF) de panne est actif pour un temps minimum prescrit.

8. Système d'alimentation en tension suivant l'une des revendications précédentes, dans lequel la source (S1) de tension principale est un circuit redresseur relié à un réseau d'alimentation en courant alternatif et la source (S2) de tension auxiliaire est un convertisseur de tension continue alimenté par un accumulateur.

9. Système d'alimentation en tension suivant l'une des revendications précédentes, dans lequel la tension intermédiaire est reliée à un convertisseur réglé de tension de branchement.

10. Combinaison de plusieurs systèmes d'alimentation en tension suivant l'une des revendications précédentes, comportant des sources de tension principale distinctes et des éléments de contrôle ainsi qu'une source commune de tension auxiliaire, les signaux numériques de panne des divers éléments de contrôle étant reliés à un circuit OU, dont la sortie commande la source de tension auxiliaire.
